# EUROPEAN PATENT SPECIFICATION

(11) **EP 1 360 028 B1**
(45) Date of publication and mention of the grant of the patent: **09.11.2005**
(21) Application number: 02715605.8
(22) Date of filing: 16.01.2002
(51) Int. Cl.: B23K 11/00, B21F 27/12

(54) **MACHINE FOR THE PRODUCTION OF REINFORCEMENT CAGES AND CONNECTED METHOD**
MASCHINE ZUR HERSTELLUNG VON VERSTÄRKUNGSKÄFIGEN UND DAMIT VERBUNDENES VERFAHREN
MACHINE POUR LA PRODUCTION DE CAGES D'ARMATURE ET CONNEXE PROCÉDÉ

(30) Priority: 19.01.2001 IT UD20010011
(43) Date of publication of application: 12.11.2003
(73) Proprietor: M.E.P. Macchine Elettroniche Piegatrici S.p.A., 33010 Reana del Rojale (UD) (IT)
(72) Inventor: DEL FABRO, Giorgio, I-33019 Tricesimo (IT); DEL FABRO, Marcello, I-33010 Tavagnacco (IT)
(74) Representative: Petraz, Gilberto Luigi
(86) International application number: PCT/IB2002/000096
(87) International publication number: WO 2002/057045

(56) References cited:
- EP-A- 0 435 769
- EP-A- 0 811 442
- WO-A-83/00647
- WO-A-85/05053
- FR-A- 2 406 483
- FR-A- 2 570 625
- US-A- 3 706 331

## Description

### FIELD OF THE INVENTION

The invention refers to a machine able to assemble reinforcement cages for reinforced concrete structures such as beams, pillars and foundations.

The invention also refers to the connected method used in a cage-forming machine.

### BACKGROUND OF THE INVENTION

It is well-known that a reinforcement cage for reinforced concrete structures consists of longitudinal rods and a plurality of transverse stirrups separated at intervals lengthwise, which hold said rods together so as to form a geometric structure of the desired section.

The attachment of the rods to each of these stirrups is normally obtaind by means of welding.

In current cage-forming machines, that is to say, partly automated machines able to facilitate the workers in the assembly operations, there are welding assemblies with automated drive which are activated in coordinated fashion with every cycle of advance movement of said longitudinal rods and sequential insertion of a new stirrup.

The welding assemblies used in these cage-forming machines can each comprise a pair of facing and counter-opposed welding elements; these welding elements are able to be fed electrically and for every cycle of advance of the longitudinal rods, the stirrup to be welded is inserted by the operator between them.

One problem which is found in known welding assemblies is that, in order to insert the stirrup between the welding elements, the operator has to make a two-fold action, that is, first he has to insert the stirrup from above and then he has to translate it horizontally for a certain distance to position it in the interspace defined between these welding elements.

This entails both a longer time for every welding cycle, and also risks of the stirrups knocking and rubbing against the welding elements; moreover, it is impossible to position two adjacent stirrups at a distance less than a minimum value of about 10 cm, due to the interference created by the welding elements themselves which prevents the stirrups from being positioned close together.

This second point is a considerable operational disadvantage, particularly for smaller sized cages which require, at least in the first part of the cage, a distance between the stirrups which can even be as low as 5 cm.

WO 85/05053, which represents the closest prior art of the present invention, discloses a welding apparatus for a cage forming machine.

This welding apparatus comprises a fixed pair of plates positioned within the perimeter of the stirrup to weld to the longitudinal wires, and a plurality of electrically conducting bridges, positioned externally to the perimeter of the stirrups, each of which may be selectively and vertically moved into contact with the wires to weld, to form an electric closed circuit along which a current is caused to flow.

This solution does not solve the problem of the insertion of the stirrups by the operator, one by one and consecutively, from the above in the welding position between the welding elements.

Moreover, this solution does not solve the problem of the positioning of two adjacent stirrups at a reciprocal very low distance.

EP-A-0811442 discloses a machine for the production of reinforcement cages and a method to produce reinforcement cages using a welding assembly with one fixed element and one movable element.

The present Applicant has devised and embodied this invention to overcome these shortcomings of the state of the art and to obtain further advantages as described hereafter.

### SUMMARY OF THE INVENTION

The invention is set forth by a machine suitable for the production of reinforcement cages according to claim 1 and a welding method according to claim 5, while the dependent claims describe other innovative features of the main embodiment.

The purpose of the invention is to achieve a welding assembly suitable to be applied to a cage-forming machine and configured so as to allow the stirrups to be positioned in an extremely close reciprocal position, as little as 5 cm, and to be joined to the relative longitudinal rods.

Another purpose is to achieve a welding assembly which allows to reduce the times of the cycle for every operation to attach the stirrups and the longitudinal rods, and also to reduce the risks of the stirrups knocking against the welding elements and the consequent damage.

The machine according to the invention comprises a welding assembly which includes a pair of welding elements (electrodes) between which the stirrup to be welded is placed, in a position of cooperation with the relative longitudinal rod to which it is to be joined.

During the welding operation and in the case of stirrups having a closed or substantially closed profile, these two welding elements are normally arranged facing each other, one inside and one outside the perimeter of the stirrup, or in any case respectively arranged on one side and the other of the segment of stirrup involved in the welding. They face each other and define an interspace between them in which the longitudinal rods which form the cage are able to advance; the relative stirrups, to be attached to said longitudinal rods, are able to be inserted in said interspace one by one.

In the typical case where several longitudinal rods are used to make the cage or pre-cage, there are as many welding assemblies as there are rods to be welded, each one defining that interspace in which the rods advance and the stirrups are inserted; the interspaces, in their entirety, define a positioning and welding seating for the stirrups, normally lying on a substantially vertical plane.

According to one characteristic of the invention, at least one of said welding elements is movable on a substantially horizontal plane, for every welding cycle, from a first operating position, wherein it is substantially facing the other welding element and is prepared for the welding operation, to a second, distanced position for the insertion of the stirrup, wherein it is located in a position of non-interference with the positioning seating of the stirrup.

According to the invention, this movable element is the one located in a position inside the perimeter of the relative stirrup.

It must be clear that when we refer to the perimeter of a stirrup it must be intended also a perimeter not completely closed, like that of a stirrup having an U or C-shape, or any other shape at least partly open.

According to another feature of the invention, this movable element moves for an amount sufficient to free the substantially vertical plane on which the stirrup to be inserted lies and thus allow the relative stirrup to be positioned substantially vertical.

With the welding assembly of the machine according to the invention, the operation to insert the stirrup required from the worker consists only of inserting a stirrup between the longitudinal rods from above; after that, the movable element of the welding assembly is taken to the operating position, welding is performed, and then this movable element is returned to the position of non-interference, the longitudinal rods advance and a new stirrup is positioned to perform a new welding operation.

The invention allows to reduce the operating times and the risks of the stirrups knocking against the welding elements during the positioning operation.

Moreover, it allows to reduce the minimum distance at which it is possible to position one stirrup with respect to the one immediately adjacent, since it eliminates any interference with the positioning operation, caused by the welding element inside the perimeter of the stirrups.

In one embodiment of the invention, upstream of every welding assembly and for each of the longitudinal rods, there are means able to achieve a relative loop on said rods, with the convex part facing outwards.

The loops of all the rods define a seating for the insertion and stable and erect positioning of the stirrups, facilitating the operation for the worker; moreover, the loops allow to keep the rods inside the lateral bulk of the relative stirrups, except for the section with the loop, which runs around the relative segment of the stirrup.

In another embodiment, the welding elements are associated with gripping and supporting elements terminally shaped substantially like a V or similar, so as to function as an element to retain the relative stirrup in the erect position.

In a further embodiment, the welding assembly has auxiliary means to support and retain the stirrups which are distinct from said welding elements and cooperate therewith.

### BRIEF DESCRIPTION OF THE DRAWINGS

These characteristics and advantages of the invention will be apparent from the following description of a preferential form of embodiment, given as a non-restrictive example with reference to the attached drawings wherein:

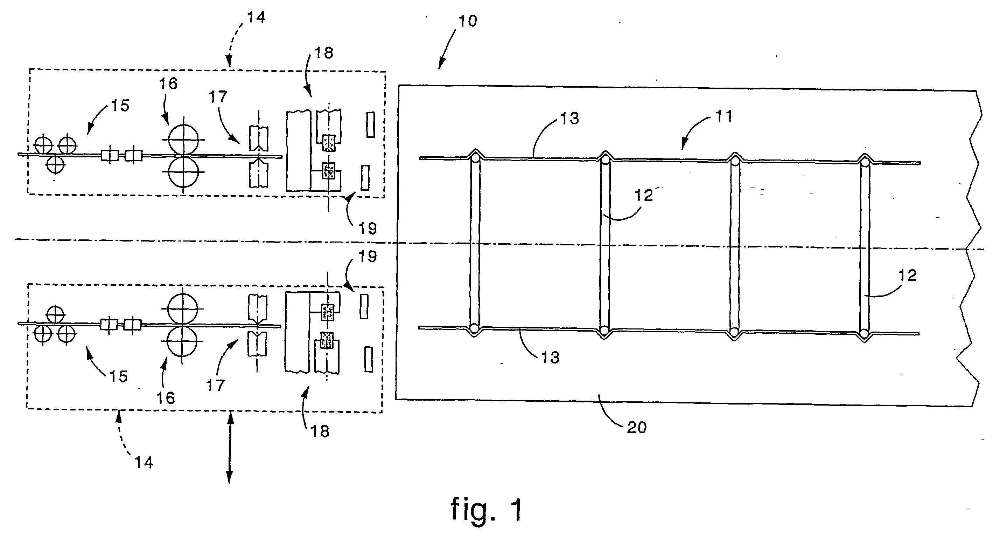

- Fig. 1: is a view from above of a cage-forming machine to which the invention is applied;
- Figs. 2a-2g: show in sequence, with a schematic view from above, the steps in the welding operation performed by the welding assembly according to the invention;
- Fig. 3: is a front view of three welding assemblies according to the invention used in the cage-forming machine in Fig. 1;
- Figs. 4 and 5: show a variant of the invention, respectively from above and the front.

### DETAILED DESCRIPTION OF SOME PREFERENTIAL EMBODIMENTS

With reference to the attached drawings, the number 10 denotes in its entirety a machine to produce reinforcement cages or pre-cages 11 consisting, in this case, of three longitudinal rods 13 and a plurality of transverse stirrups 12.

The longitudinal rods 13 can be definitive rods according to design specifications, that is, with a structural function, or auxiliary rods solely with the function of connecting the stirrups 12.

The machine 10 comprises, for each of the rods 13, a working assembly 14 able to act in coordination with the work assemblies 14 which operate on the other rods 13.

Each work assembly 14 comprises the following components arranged in succession: a straightening device 15, a drawing assembly with rollers 16, a punch 17, a welding assembly 18 and a shears 19. The position of the shears 19 downstream of the welding assembly 18 allows to perform shearing even immediately after the stirrup 12 on the finished cage 11, without needing to perform auxiliary trimming operations.

Downstream of the work assemblies 14 there is also a supporting plane 20 on which the cage 11 is progressively formed.

At least some of the work assemblies 14 can be movable transversely in order to vary the distance from the opposite work assembly according to the width of the cage 11 to be made. The work assemblies 14, or at least some of them, can also be movable vertically, one independently of the other, so that it is possible to vary the attachment positions of the rods 13 with respect to the stirrups 12.

The straightening device 15, the drawing assembly 16, the punch 17 and the shears 19 are all of a conventional type and are not described in greater detail here, since they are not relevant for the purposes of the invention. It is clear that these assemblies 15, 16, 17 and 19 can be of a different type from those shown here.

For every cycle of feed of the longitudinal rods 13, the punch 17 is able to make a loop 22 on a relative rod 13; the loop 22 has a convex shape facing towards the outside and the depth and extension thereof is correlated substantially to the diameter of the stirrups 12.

These loops 22 are able to define respective insertion seatings for a stirrup 12 wherein the latter is held in a substantially erect position orthogonal to the longitudinal rods 13. Moreover, these loops 22 cause the rods 13 to run within the lateral bulk of the stirrups 12 except for the segment which connects with the stirrups 12.

The shears 19 is able to shear a relative longitudinal rod 13 when the cage 11 is substantially assembled, or in emergency situations.

The welding assembly 18 is composed of two welding elements, respectively 21a located outside the perimeter of the relative stirrup 12 and 21b located inside said perimeter; they function substantially as electrodes to perform the welding action.

At least one of the two welding elements 21a and 21b is connected to a source of electricity, not shown here, suitable to be activated on command during the welding cycle.

The two elements 21a and 21b are able to move in a direction substantially orthogonal to the longitudinal axis of the cage 11, remaining substantially on the vertical plane which contains the stirrup 12 to be welded; this movement serves to take said elements 21a, 21b from a reciprocally distanced position, during the advance of the rods 13 and the insertion of the stirrup 12, to a closed position where they are reciprocally nearer and the rods 13 and stirrup 12 are in contact, so that welding can be performed.

All this is substantially what happens in the state of the art.

According to the main characteristic of the invention, the welding element 21b inside the perimeter of the stirrup 12 is able to move in a direction substantially parallel to the longitudinal axis of the cage 11, to move from a first operating position "I", facing the other element 21a, and lying substantially on the vertical plane containing the stirrup 12, to a second position "II" of non-interference, distant from the vertical plane and staggered with respect to said other element 21a.

This movement is performed with every cycle of feeding the rods 13 and positioning the stirrups 12, and serves to free the space to position the stirrups 12 which have to be inserted, one by one and with a single movement from above.

In this way, when the stirrups 12 are inserted, there is no need for further movements of horizontal translation to position every stirrup 12 between the welding elements 21a, 21b; hence all the connected shortcomings, as described above and which normally occur in conventional welding assemblies, are eliminated.

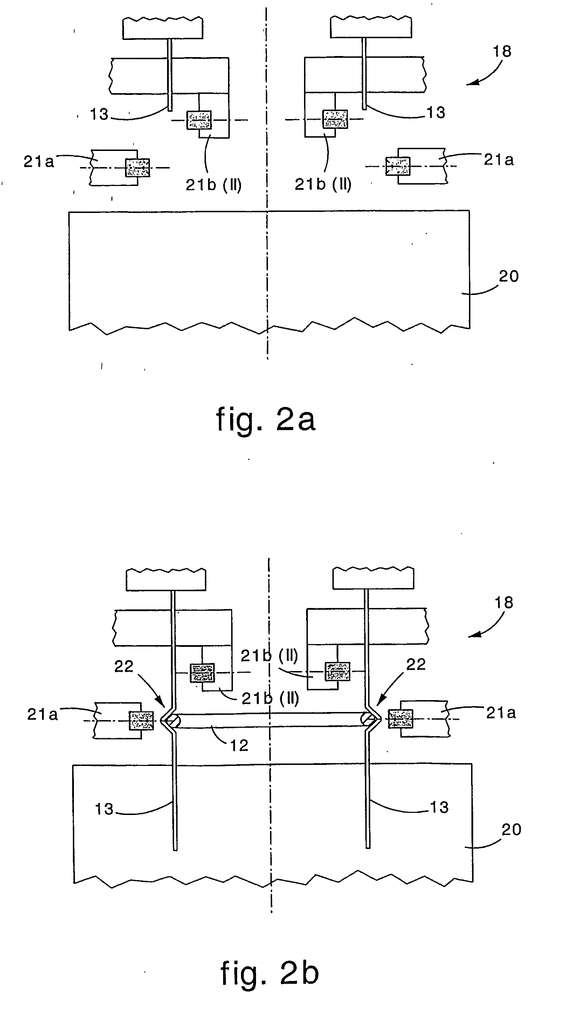

The positioning and welding cycle performed for every stirrup 12 is shown in Figs. 2a-2g.

In Fig. 2a, the inner welding element 21b of every welding assembly 18 is in the position "II" of non-interference. The longitudinal rods 13 are made to advance by the drawing assembly 16 and the punches 17 make a relative loop 22 thereon, the loop 22 being located lengthwise in a position facing the outer welding element 21a, which is fixed lengthwise.

In this position, simply by inserting it from above, the operator positions a stirrup 12 and arranges it between the loops 22 which act as an element to guide it and support it in the erect position (Fig. 2b). The stirrup 12 is supported from below by supporting elements 23.

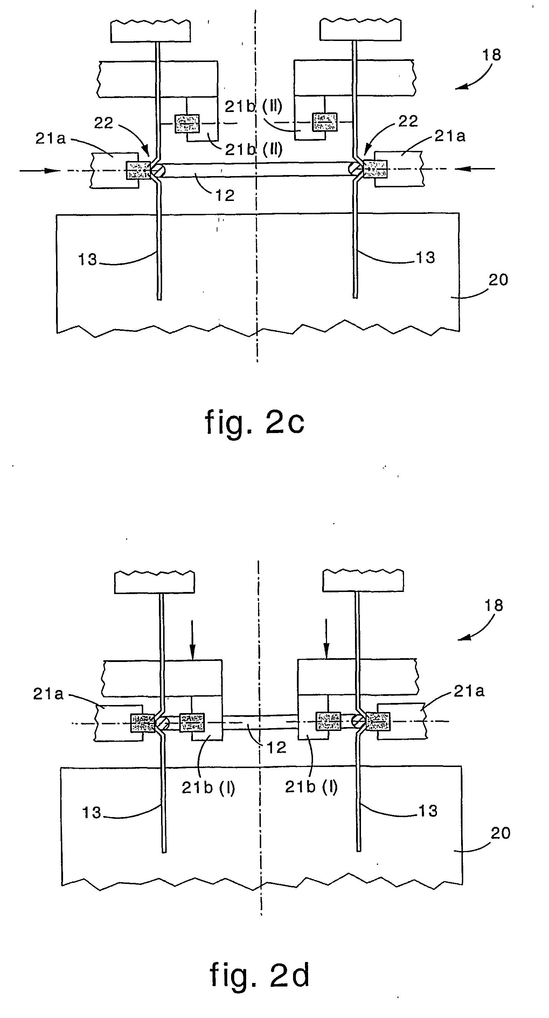

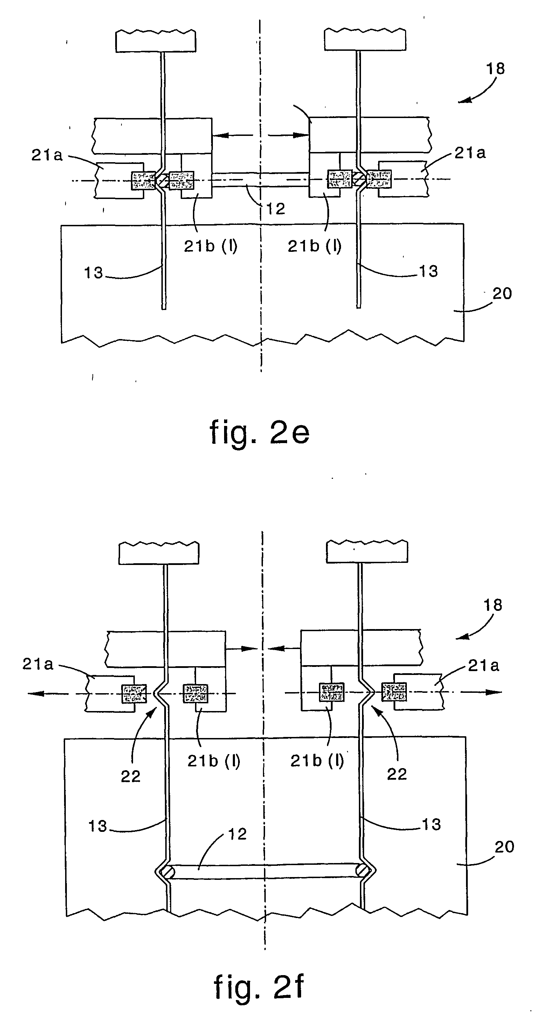

When the stirrup 12 is in position, the outer welding element 21a is taken to the position where it is closed on the rod 13 and the stirrup 12 (Fig. 2c), then the inner welding element 21b is first moved lengthwise from the second position of non-interference "II" to the first operating position "I" (Fig. 2d) and then to the closed position on the stirrup 12 which is ready for welding (Fig. 2e).

After welding, the welding elements 21a and 21b open, the longitudinal rods 13 are made to advance by the drawing assembly 16, drawing with them the first stirrup 12 too, until a new loop 22 is located in correspondence with the welding position (Fig. 2f).

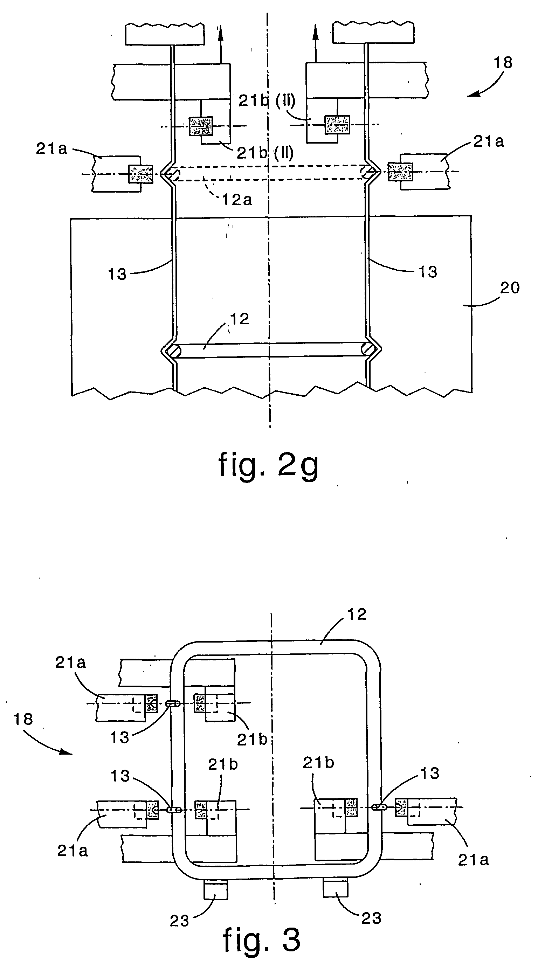

Simultaneously, or in any case in coordination with the advance movement of the rods 13, the inner welding element 21b retreats to its position of non-interference "II" (Fig. 2g), to allow the operator to position a new stirrup 12a between the loops 22 simply by inserting it from above.

Then the welding cycle is repeated in the same sequence as is described in Figs. 2b-2f.

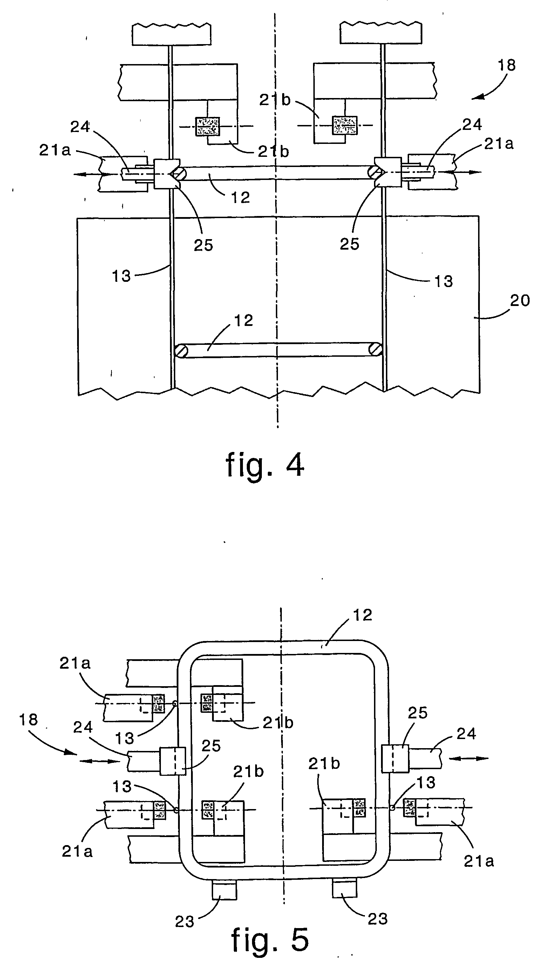

According to a variant shown in Figs. 4 and 5, the welding cycle is performed on straight rods 13, that is to say, without loops.

In this case, at least a lateral support element 24 is provided (in this case two), equipped with a cyclical to-and-fro movement with respect to a relative stirrup 12; the lateral support element 24 is equipped at the end with a V-shaped gripping element 25 able to cooperate with a lateral segment of the stirrup 12.

This gripping element 25 is taken to the operating position in coordination with the welding cycle and as the forming cage 11 advances; the function thereof is to keep the stirrup 12, before welding, in the erect position and ready for welding.

According to another variant, which is not shown here, the lateral support element is incorporated in at least one of the welding elements 21a, 21b.

It is clear, however, that modifications and/or additions can be made to the assembly and the method as described heretofore, without departing from the scope of the claims.

## Claims

1. Machine suitable for the production of reinforcement cages (11) formed by a plurality of longitudinal rods (13) connected by transverse stirrups (12) arranged at intervals along them, the machine comprising a welding assembly, the welding assembly (18) comprising at least a pair of welding elements (21a, 21b) arranged facing each other and defining an interspace inside which said longitudinal rods (13) are able to be made to advance step-wise and said stirrups (12) to be connected are able to be positioned one by one, **characterized in that** at least one of said welding elements (21a, 21b) is movable on a substantially horizontal plane and substantially parallel to the longitudinal axis of the cage (11) from a first operating position (I), wherein it is substantially facing the other welding element and is pre-disposed for the operation to weld the rods (13) and relative stirrup (12), to a second distanced position (II) for the insertion of the stirrup (12), wherein the welding element (21b) positions itself in a position of non-interference with the seating wherein the stirrup (12) is positioned and welded, the distance between the first (I) and the second (II) position being sufficient to free from interference the substantially vertical plane on which the stirrup (12) to be inserted into the welding position lies and wherein the movable welding assembly (21b) is arranged inside the perimeter of the stirrup (12).

2. Welding assembly as in claim 1 , **characterized in that** it comprises at least a gripping and supporting element, substantially V-shaped at the terminal part and able to function as an element to hold a relative stirrup (12) in the erect position during its insertion into the welding position.

3. Welding assembly as in claim 2, **characterized in that** said gripping and supporting element is substantially incorporated into at least one of said welding elements (21a, 21b).

4. Welding assembly as in claim 2, **characterized in that** said gripping and supporting element (24, 25) is distinct from said welding elements (21a, 21b) and cooperates therewith.

5. Welding method for cage-forming machines (10) able to produce reinforcement cages (11) formed by a plurality of longitudinal rods (13) connected by stirrups (12) arranged at intervals along them, the method comprising a step of step-wise advance of said rods (13) to position a segment thereof in the interspace defined between two welding elements (21a, 21b), counter-opposed and facing each other, of at least one welding assembly (18), a step of positioning at least one stirrup (12) at a time in correspondence with said interspace between said welding elements (21a, 21b), a step of closing said welding elements (21a, 21b) on rods (13) and stirrup (12) to perform the welding operation, a step of opening said welding elements (21a, 21b) and a step of step-wise advance of said rods (13) with said stirrup (12) welded thereto, the method being **characterized in that**, before the step of positioning a new stirrup (12), it comprises at least a step to move on a substantially horizontal plane at least one of said welding elements (21a, 21b) to take it to a distanced position (II) of non-interference with the positioning and welding seating of the stirrup (12), and, when the stirrup (12) has been inserted, a step of inverse movement to take said movable welding element (21b) to the welding position, counter-opposed and facing the other welding element (21a), wherein said movement step provides to move said movable welding element (21b) for an amount sufficient to free the substantially vertical plane on which the stirrup (12) to be welded lies and wherein said movable welding element (21b) is arranged inside the perimeter of the stirrup (12) and is able to move substantially parallel to the longitudinal axis of the cage (11) and to thus allow said stirrup (12) to be positioned by means of a single movement of insertion from above.

6. Method as in claim 5, **characterized in that**, before the step-wise advance of said rods (13), it provides a step to make loops (22) thereon, able to define a stable positioning seating for the insertion of said stirrups (12) from above.

7. Method as in claim 5, **characterized in that**, before the step-wise advance of said rods (13), it provides to activate at least an auxiliary gripping and supporting element (24, 25) able to define a stable positioning seating for the insertion of said stirrups (12) from above.

## Patentansprüche

1. Maschine, die sich zur Herstellung von Verstärkungskäfigen (11) eignet, die aus einer Mehrzahl von Längsstäben (13) bestehen, die durch Querbügel (12) verbunden sind, die in Anständen entlang von diesen angeordnet sind, wobei die Maschine eine Schweißeinheit umfasst, wobei die Schweißeinheit (18) mindestens ein Paar von Schweißelementen (21a, 21b) umfasst, die einander zugewandt angeordnet sind und einen Zwischenraum bilden, in dem die Längsstäbe (13) so hergestellt werden können, dass sie schrittweise vorrücken, und die anzuschließenden Querbügel (12) nacheinander positioniert werden können, **dadurch gekennzeichnet, dass** mindestens eines der Schweißelemente (21a, 21b) auf einer im Wesentlichen horizontalen Ebene und im Wesentlichen parallel zur Längsachse des Käfigs (11) von einer ersten Betriebsposition (1), in der es dem anderen Schweißelement im Wesentlichen zugewandt und für den Vorgang zum Schweißen der Stäbe (13) und des entsprechenden Querbügels (12) vorbereitet ist, zu einer zweiten beabstandeten Position (II) zum Einsetzen des Querbügels (12) bewegbar ist, wobei sich das Schweißelement (21b) selbst in einer Position positioniert, in der die Sitzfläche nicht gestört wird, in der der Querbügel (12) positioniert und angeschweißt wird, wobei der Abstand zwischen der ersten (I) und der zweiten (II) Position ausreicht, um die im Wesentlichen vertikale Ebene frei von Störung zu halten, auf der der Querbügel (12) liegt, der in die Schweißstelle eingesteckt werden soll, und wobei die bewegbare Schweißeinheit (21b) innerhalb der äußeren Begrenzung des Querbügels (12) angeordnet ist,

2. Schweißeinheit nach Anspruch 1, **dadurch gekennzeichnet, dass** sie mindestens ein Greif- und Tragelement umfasst, das am Endteil im Wesentlichen V-förmig ist und als Element fungieren kann, um einen entsprechenden Querbügel (12) während seines Einsteckens in die Schweißstelle in aufrechter Stellung zu halten.

3. Schweißeinheit nach Anspruch 2, **dadurch gekennzeichnet, dass** das Greif- und Tragelement im Wesentlichen in mindestens eines der Schweißelemente (21a, 21b) eingebaut ist.

4. Schweißeinheit nach Anspruch 2, **dadurch gekennzeichnet, dass** das Greif- und Trageletnent (24, 25) von den Schweißelementen (21a, 21b) gettennt ist und mit diesen zusammenwirkt.

5. Schweißverfahren für Käfigherstellungsmaschinen (10), die Verstärkungskäfige (11) herstellen können, die aus einer Mehrzahl von Längsstäben (13) bestehen, die durch Querbügel (12) verbunden sind, die in Abständen entlang von diesen angeordnet sind, wobei das Verfahren einen Schritt des schrittweisen Vorrückens der Stäbe (13) umfasst, um ein Teilstück davon in dem Zwischenraum zu positionieren, der zwischen zwei entgegengesetzten und einander zugewandten Schweißelementen (21a, 21b) mindestens einer Schweißeinheit (18) gebildet ist, einen Schritt des Positionierens mindestens je eines Querbügels (12) übereinstimmend mit dem Zwischenraum zwischen den Schweißelementen (21a, 21b), einen Schritt des Schließens der Schweißelemente (21a, 21b) über den Stäben (13) und dem Querbügel (12), um den Schweißbetrieb durchzuführen, einen Schritt des Öffnens der Schweißelemente (21a, 21b), und einen Schritt des schrittweisen Vorrückens der Stäbe (13) mit dem darauf angeschweißten Querbügel (12), wobei das Verfahren **dadurch gekennzeichnet ist, dass** es vor dem Schritt des Positionierens eines neuen Querbügels (12) mindestens einen Schritt umfasst, mindestens eines det Schweißelemente (21a, 21b) auf einer im Wesentlichen horizontalen Ebene zu bewegen, um cs zu einer beabstandeten Position (II) zu bringen, die die Positionierungs- und Schweißsitzfläche des Querbügels (12) nicht stött, und, wenn der Querbügel (12) eingesetzt wurde, einen Schritt der umgekehrten Bewegung, um das bewegbare Schweißelement (21b) zur entgegengesetzten und dem anderen Schweißelement (21a) zugewandten Schweißposition zu bringen, wobei der Bewegungsschritt vorsieht, das bewegbare Schweißelement (21b) um einen Betrag zu bewegen, der ausreicht, um die im Wesentlichen vertikale Ebene, auf der der anzuschweißende Querbügel (12) liegt, freizuhalten, und wobei das bewegbare Schweißelement (21b) innerhalb der äußeren Begrenzung des Querbügels (12) angeordnet ist und sich im Wesentlichen parallel zur Längsachse des Käfigs (11) bewegen und somit ermöglichen kann, dass der Querbügel (12) mittels einer einzigen Einsteckbewegung von oben positioniert werden kann.

6. Verfahren nach Anspruch 5, **dadurch gekennzeichnet, dass** es vor dem schrittweisen Vorrücken der Stäbe (13) einen Schritt vorsieht, auf diesen eine Windung herzustellen, die eine stabile Positionierungssitzfläche für das Einstecken der Querbügel (12) von oben bilden kann.

7. Verfahren nach Anspruch 5, **dadurch gekennzeichnet, dass** es vor dem schrittweisen Vorrücken der Stäbe (13) vorsicht, mindestens ein zusätzliches Greif und Tragelement (24, 25) zu aktivieren, das einen stabilen Positionierungssitz für das Einstecken der Querbügel (12) von oben festlegen kann.

## Revendications

1. Machine adaptée à la production de cages d'armature (11) formées par une pluralité de tiges longitudinales (13) raccordées par des étriers transversaux (12) agencés à des intervalles le long de celles-ci, la machine comprenant un ensemble de soudure, l'ensemble de soudure (18) comprenant au moins une paire d'éléments de soudure (21a, 21b) agencés en se faisant face et définissant un espace dans lequel lesdites tiges longitudinales (13) sont capables d'être avancées progressivement et lesdits étriers (12) devant être raccordés sont capables d'être positionnés un par un, **caractérisée en ce qu'**au moins un desdits éléments de soudure (21a, 21b) est mobile sur un plan sensiblement horizontal et sensiblement parallèle à l'axe longitudinal de la cage (11) à partir d'une première position de fonctionnement (I), dans laquelle il fait sensiblement face à l'autre élément de soudure et est prédisposé pour l'opération de soudure des tiges (13) et de l'étrier relatif (12), vers une seconde position éloignée (II) pour l'insertion de l'étrier (12), dans laquelle l'élément de soudure (21b) se positionne dans une position sans perturbation avec l'appui dans lequel l'étrier (12) est positionné et soudé, la distance entre la première position (I) et la seconde position (II) étant suffisante pour libérer des perturbations le plan sensiblement vertical sur lequel l'étrier (12) devant être inséré dans la position de soudure repose et dans lequel l'ensemble de soudure mobile (21b) est agencé à l'intérieur du périmètre de l'étrier (12).

2. Ensemble de soudure selon la revendication 1, **caractérisé en ce qu'**il comprend au moins un élément de support et de serrage, sensiblement en forme de V sur la partie d'extrémité et capable de fonctionner comme un élément de maintien d'un étrier relatif (12) dans la position dressée au cours de son insertion dans la position de soudure.

3. Ensemble de soudure selon la revendication 2, **caractérisé en ce que** ledit élément de support et de serrage est sensiblement incorporé à au moins un desdits éléments de soudure (21a, 21b).

4. Ensemble de soudure selon la revendication 2, **caractérisé en ce que** ledit élément de support et de serrage (24, 25) est distinct desdits éléments de soudure (21a, 21b) et coopère avec eux.

5. Procédé de soudure pour des machines de formage de cages (10) capable de produire des cages d'armature (11) formées par une pluralité de tiges longitudinales (13) raccordées par des étriers (12) agencés à des intervalles le long de celles-ci, le procédé comprenant une étape d'avancée progressive desdites tiges (13) pour positionner un segment de celle-ci dans un espace défini entre deux éléments de soudure (21a, 21b), opposés et se faisant face, au moins un ensemble de soudure (18), une étape de positionnement d'au moins un étrier (12) à la fois en correspondance avec l'espace compris entre lesdits éléments de soudure (21a, 21b), une étape de fermeture desdits éléments de soudure (21a, 21b) sur les tiges (13) et l'étrier (12) pour réaliser l'opération de soudure, une étape d'ouverture desdits éléments de soudure (21a, 21b) et une étape d'avancée progressive desdites tiges (13) avec ledit étrier (12) soudé à celles-ci, le procédé étant **caractérisé en ce que**, avant l'étape de positionnement d'un nouvel étrier (12), il comprend au moins une étape de déplacement sur un plan sensiblement horizontal au moins un desdits éléments de soudure (21a, 21b) pour le déplacer dans une position distante (II) sans perturbation avec l'appui de soudure et de positionnement de l'étrier (12), et, lorsque l'étrier (12) a été inséré, une étape de mouvement inverse pour mettre ledit élément de soudure mobile (21b) dans la position de soudure, opposé et faisant face à l'autre élément de soudure (21a), dans lequel l'étape de déplacement est proposée pour déplacer ledit élément de soudure mobile (21b) suffisamment pour libérer le plan sensiblement vertical sur lequel l'étrier (12) devant être soudé repose et dans lequel ledit élément de soudure mobile (21b) est agencé à l'intérieur du périmètre de l'étrier (12) et est capable de se déplacer de manière sensiblement parallèle à l'axe longitudinal de la cage (11) et ainsi permettre au dit étrier (12) d'être positionné au moyen d'un déplacement unique d'insertion par le dessus.

6. Procédé selon la revendication 5, **caractérisé en ce que**, avant l'avancée progressive desdites tiges (13), il propose une étape de réalisation de boucles (22) sur celles-ci, capable de définir un appui de positionnement stable pour insérer lesdits étriers (12) par le dessus.

7. Procédé selon la revendication 5, **caractérisé en ce que**, avant l'avancée progressive desdites tiges (13), il propose d'activer au moins un élément de support et de serrage auxiliaire (24, 25) capable de définir un appui de positionnement stable pour l'insertion desdits étriers (12) par le dessus.
